# EUROPÄISCHE PATENTSCHRIFT

(11) **EP 2 002 503 B1**
(45) Veröffentlichungstag und Bekanntmachung des Hinweises auf die Patenterteilung: **23.09.2009**
(21) Anmeldenummer: 07722131.5
(22) Anmeldetag: 30.03.2007
(51) Int. Cl.: H01M 8/24, H01M 8/12

(54) **HOCHTEMPERATUR-BRENNSTOFFZELLENSTAPEL**
HIGH-TEMPERATURE FUEL CELL STACK
PILE À COMBUSTIBLE À HAUTE TEMPÉRATURE

(30) Priorität: 31.03.2006 DE 102006015118
(43) Veröffentlichungstag der Anmeldung: 17.12.2008
(73) Patentinhaber: Enerday GmbH, 82131 Stockdorf (DE); Staxera GmbH, 01237 Dresden (DE)
(72) Erfinder: REINERT, Andreas, 01277 Dresden (DE); ROZUMEK, Michael, 17033 Neubrandenburg (DE); BERGMANN, Uwe, 17235 Neustrelitz (DE); HAFEMEISTER, Jens, 17235 Neustrelitz (DE)
(74) Vertreter: Schumacher & Willsau
(86) Internationale Anmeldenummer: PCT/DE2007/000573
(87) Internationale Veröffentlichungsnummer: WO 2007/112728

(56) Entgegenhaltungen:
- EP-A1- 0 329 161
- WO-A-20/05011040
- DE-B3- 10 308 382

## Beschreibung

Die Erfindung betrifft einen Hochtemperatur-Brennstoffzellenstapel, der durch eine temporäre Verspannvorrichtung verspannt ist. Weiterhin betrifft die Erfindung ein Verfahren zum temporären Verspannen eines Hochtemperatur-Brennstoffzellenstapels und ein Verfahren zum Entfernen einer temporären Verspannvorrichtung eines Hochtemperatur-Brennstoffzellenstapels. Die Erfindung betrifft auch eine spezielle Verwendung von Kunststoffbauteilen.

Hochtemperatur-Brennstoffzellenstapel, wie beispielsweise SOFC-Stacks, werden unter einer definierten Verspannung hergestellt beziehungsweise gefügt. Diese Verspannung muss permanent aufrechterhalten werden. Aufgrund der in Hochtemperatur-Brennstoffzellenstapeln eingesetzten Komponenten und Werkstoffe mit leicht unterschiedlichen thermischen Ausdehnungskoeffizienten und des Temperaturunterschiedes von beispielsweise 850 °C Betriebs- und Fügetemperatur sowie im abgekühlten Zustand Raumtemperatur, ergeben sich nämlich innere Spannungen, die ohne eine ausreichende Verspannung beispielsweise ein Abheben von Kontaktschichten, ein Aufreißen von Dichtungen und somit eine Verschlechterung der Brennstoffzellenstapelleistung zur Folge haben können. Die Verspannung permanent aufrechtzuerhalten kann beispielsweise bedeuten, dass die Verspannung während der Herstellung des Hochtemperatur-Brennstoffzellenstapels, während des Ausbaus aus dem Ofen, während dem Transport des Hochtemperatur-Brennstoffzellenstapels, während dem Einbau des Hochtemperatur-Brennstoffzellenstapels in das jeweilige System, während der Übernahme der Verspannung durch eine endgültige Systemverspannvorrichtung und während des Betriebs des Hochtemperatur-Brennstoffzellenstapels im System aufrechterhalten werden muss. Für diese verschiedenen Phasen sind unterschiedliche Technologien zur Aufbringung der Verspannkraft bekannt. Während der Herstellung des Hochtemperatur-Brennstoffzellenstapels kann die Verspannung beispielsweise durch das Auflegen einer Last hervorgerufen werden. Aus der DE 103 34 129 A1 ist es bekannt, den Hochtemperatur-Brennstoffzellenstapel mittels eines oder mehrerer Aktoren kraft- und/oder weggeregelt zu fügen. Sofern eine permanente, interne Brennstoffzellenstapelverspannung durch Zuganker und elastische Elemente oder eine Verspannung durch steife Verspannelemente mit integriertem thermischen Ausdehnungsmechanismus (siehe zum Beispiel WO 2004102706 A2 oder CA 2453061 A1) verwendet wird, kann diese Verspannung vom Ofenausbau bis einschließlich zum Betrieb des Hochtemperatur-Brennstoffzellenstapels verwendet werden. Der Einsatz von Zugankern aus hochwarmfesten Stählen ist jedoch sehr kostenintensiv und birgt weiterhin die Gefahr, dass durch Kriechvorgänge eine gleichmäßige Verspannung über einen langen Zeitraum nicht aufrechterhalten werden kann. Elastische Elemente zur Kompensation der Kriechvorgänge, die die hohen Betriebstemperaturen von beispielsweise 850 °C überstehen, sind ebenfalls teuer oder sogar nicht verfügbar, weshalb die elastischen Elemente zur Kompensation der Kriechvorgänge häufig außerhalb der Isolation des Hochtemperatur-Brennstoffzellenstapels angeordnet werden. Zu diesem Zweck sind in vielen Fällen Durchbrüche in der Isolation erforderlich, die zu Wärmeverlusten führen können.

Aus der DE 103 08 382 B3 ist es bekannt, den Brennstoffzellenstapel nach dem Abkühlen im Ofen zunächst mit einer temporären Verspannvorrichtung zu verspannen, anschließend eine Isolation des Brennstoffzellenstapels vorzunehmen, außerhalb der Isolation eine endgültige Verspannvorrichtung vorzusehen und dann die temporäre Verspannvorrichtung zu entfernen. Gemäß der Lehre der DE 103 08 382 B3 müssen somit Durchbrüche in der Isolation vorgesehen werden, um die temporäre Verspannvorrichtung zu entfernen, und anschließend werden die entsprechenden Öffnungen mit Isolationsmaterial aufgefüllt. Danach kann der Brennstoffzellenstapel in Betrieb genommen werden. Nachteilig an dieser Lösung ist, dass das manuelle Entfernen der temporären Verspannvorrichtung und das Abdichten der Öffnungen in der Isolation Aufwand und Kosten verursachen und nachteilig für die Integrität und die Funktion der Isolation sind. Darüber hinaus kann es beim Entfernen der temporären Verspannvorrichtung leicht zu Beschädigungen des Brennstoffzellenstapels kommen.

Der Erfindung liegt die Aufgabe zugrunde, diese Nachteile zu beseitigen.

Diese Aufgabe wird durch die in den unabhängigen Ansprüchen angegebenen Merkmale gelöst.

Vorteilhafte Ausführungsformen und Weiterbildungen der Erfindung ergeben sich aus den abhängigen Ansprüchen.

Der erfindungsgemäße Hochtemperatur-Brennstoffzellenstapel baut auf dem gattungsgemäßen Stand der Technik dadurch auf, dass die temporäre Verspannvorrichtung aus einem Kunststoffmaterial besteht, das bei einer Temperatur verbrennt, die niedriger als die Betriebstemperatur des Hochtemperatur-Brennstoffzellenstapels ist. Durch diese Lösung ist es möglich, die temporäre Verspannvorrichtung durch einfaches Inbetriebnehmen des Hochtemperatur-Brennstoffzellenstapels durch vorzugsweise rückstandloses Verbrennen zu entfernen, nachdem eine endgültige Verspannvorrichtung vorgesehen wurde, vorzugsweise außerhalb einer zwischenzeitlich angebrachten Isolation. Damit entfallen die beispielsweise gemäß der DE 103 08 382 B3 aufwendigen und gefährlichen Maßnahmen zum Entfernen der temporären Verspannvorrichtung.

In diesem Zusammenhang kann in vorteilhafterweise vorgesehen sein, dass das Kunststoffmaterial Polymerkunststoff umfasst, insbesondere Polypropylen und/oder Polyethylen. Polypropylen kann beispielsweise eine,Schmelztemperatur von 132 °C haben, während Polyethylen eine Schmelztemperatur von beispielsweise 163 °C haben kann; beide Polymerkunststoffe verbrennen bei höheren Temperaturen.

Bei bevorzugten Ausführungsformen des erfindungsgemäßen Hochtemperatur-Brennstoffzellenstapels ist vorgesehen, dass die temporäre Verspannvorrichtung zumindest eine Kunststoffschraube, zumindest eine Kunststoffmutter, zumindest ein Kunststoffband, zumindest eine Kunststoffhülse, zumindest einen Kunststoffstab und/oder Schrumpffolie umfasst. Grundsätzlich kommen alle Kunststoffelemente in Betracht, die dazu geeignet sind, die zur Verspannung erforderlichen Kräfte aufzubringen, und bei einer Temperatur verbrannt zu werden, die niedriger als die Betriebstemperatur des Hochtemperatur-Brennstoffzellenstapels ist.

Gemäß einer bevorzugten Weiterbildung des erfindungsgemäßen Hochtemperatur-Brennstoffzellenstapels ist vorgesehen, dass der Hochtemperatur-Brennstoffzellenstapel zwei zumindest im wesentlichen parallele Endplatten umfasst, die durch die temporäre Verspannvorrichtung aufeinander zu verspannt werden, und dass sich die temporäre Verspannvorrichtung nicht oder nur geringfügig über die Endplatten hinaus erstreckt. Beispielsweise können die Endplatten in ihren Eckbereichen vorstehende und mit Bohrungen versehene Laschen aufweisen, wobei jeweils zwei dieser Bohrungen miteinander ausgerichtet und zur Aufnahme von Senkkopfschraubenköpfen ausgelegt sein können. In diesem Fall ist es möglich, praktisch plane Ober- und Unterseiten des Hochtemperatur-Brennstoffzellenstapels vorzusehen, was beispielsweise ein problemloses Stapeln von mehreren derartiger Brennstoffzellenstapeln ermöglicht.

Das erfindungsgemäße Verfahren zum temporären Verspannen eines Hochtemperatur-Brennstoffzellenstapels zeichnet sich durch den folgenden Schritt aus: Verspannen des Hochtemperatur-Brennstoffzellenstapels mit einer temporären Verspannvorrichtung, die aus einem Kunststoffmaterial besteht, das bei einer Temperatur verbrennt, die niedriger als die Betriebstemperatur des Hochtemperatur-Brennstoffzellenstapels ist.

Dadurch wird die Grundlage für die Durchführung des später erläuterten erfindungsgemäßen Verfahrens zum Entfernen einer temporären Verspannvorrichtung eines Hochtemperatur-Brennstoffzellenstapels geschaffen.

In Verbindung mit dem erfindungsgemäßen Verfahren zum temporären Verspannen eines Hochtemperatur-Brennstoffzellenstapels wird ebenfalls bevorzugt, dass das Kunststoffmaterial Polymerkunststoff umfasst, insbesondere Polypropylen und/oder Polyethylen.

Das erfindungsgemäße Verfahren zum Entfernen einer temporären Verspannvorrichtung eines Hochtemperatur-Brennstoffzellenstapels zeichnet sich durch den folgenden Schritt aus: Inbetriebnehmen des Hochtemperatur-Brennstoffzellenstapels und dabei Verbrennen der temporären Verspannvorrichtung.

Auch durch diese Lösung werden die aus der DE 10 308 382 B3 bekannten und gefährlichen Maßnahmen zum Entfernen der temporären Verspannvorrichtung vermieden.

Im Zusammenhang mit dem erfindungsgemäßen Verfahren zum Entfernen der temporären Verspannvorrichtung wird ebenfalls bevorzugt, dass das Kunststoffmaterial Polymerkunststoff umfasst, insbesondere Polypropylen und/oder Polyethylen.

Die Erfindung betrifft weiterhin die Verwendung zumindest einer Kunststoffschraube, zumindest einer Kunststoffmutter, zumindest eines Kunststoffbandes, zumindest einer Kunststoffhülse, zumindest eines Kunststoffstabes und/oder von Schrumpffolie als temporäre Verspannvorrichtung für einen Hochtemperatur-Brennstoffzellenstapel.

Auch in diesem Zusammenhang wird bevorzugt, dass das Kunststoffmaterial Polymerkunststoff umfasst, insbesondere Polypropylen und/oder Polyethylen.

Bevorzugte Ausführungsformen der Erfindung werden nachfolgend anhand der zugehörigen Zeichnungen beispielhaft erläutert.

Es zeigen:
- Figur 1: eine perspektivische Darstellung einer Ausführungsform des erfindungsgemäßen Hochtemperatur-Brennstoffzellenstapels, auf den das erfindungsgemäße Verfahren zum temporären Verspannen eines Hoch- temperatur-Brennstoffzellenstapels an- gewendet wurde und der zur Durchführung des erfindungsgemäßen Verfahrens zum Entfernen einer temporären Verspannvor- richtung vorbereitet ist; und
- Figur 2a bis 2e: verschiedene Kunststoffelemente, die erfindungsgemäß als temporäre Verspann- vorrichtung für Hochtemperatur- Brennstoffzellenstapel verwendet werden können.

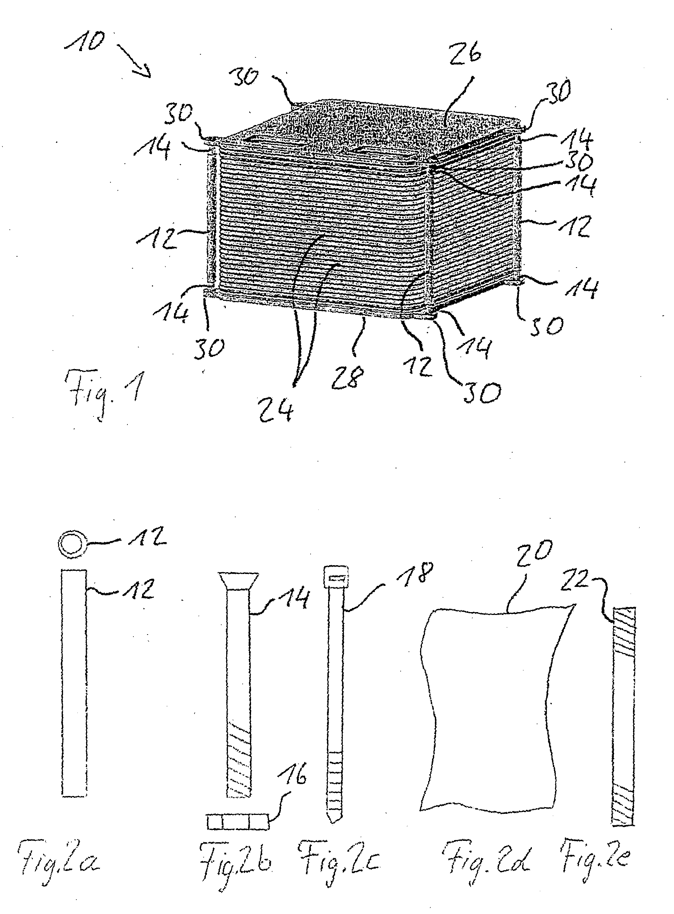

Figur 1 zeigt eine perspektivische Darstellung einer Ausführungsform des erfindungsgemäßen Hochtemperatur-Brennstoffzellenstapels 10. Der dargestellte Brennstoffzellenstapel weist in an sich bekannter Weise eine Mehrzahl von Wiederholelementen 24 auf, die zwischen einer oberen Endplatte 26 und einer unteren Endplatte 28 angeordnet sind. Die obere Endplatte 26 und die untere Endplatte 28 weisen in ihren jeweiligen Eckbereichen Laschen 30 auf, die mit einer Senkbohrung ausgestattet sind. Bei der in Figur 1 dargestellten Ausführungsform ist die temporäre Verspannvorrichtung durch vier mit einem Innengewinde ausgestatte Hülsen 12 (von denen nur drei sichtbar sind) und acht mit einem Senkkopf ausgestattete Schrauben 14 (von denen nur sechs sichtbar sind) gebildet. Sowohl die mit Innengewinde ausgestatteten Hülsen 12 als auch die Schrauben 14 sind aus einem Kunststoff hergestellt, der bei einer Temperatur verbrennt, vorzugsweise rückstandsfrei, die niedriger als die Betriebstemperatur des Hochtemperatur-Brennstoffzellenstapels ist, die beispielsweise 850 °C betragen kann. Das Kunststoffmaterial kann beispielsweise Polymerkunststoffe wie Polypropylen und/oder Polyethylen umfassen.

Um den Hochtemperatur-Brennstoffzellenstapel in den in Figur 1 dargestellten Zustand zu bringen, wurde dieser zunächst unter Erhitzung gefügt, beispielsweise so, wie dies in der DE 103 34 129 A1 beschrieben ist, deren Inhalt Bestandteil der Offenbarung dieser Beschreibung sein soll. Somit wird der Brennstoffzellenstapel bei seiner Herstellung nicht durch Auflegen einer Last einem definierten Druck ausgesetzt, wie dies aus der DE 103 08 382 B3 bekannt ist, sondern durch einen Kraftaktor. Dieser Kraftaktor verfügt zusätzlich über die Möglichkeit, den Absetzweg zu überwachen und durch eine Variation der Druckkraft zu beeinflussen. Diese so aufgebrachte Kraft findet Anwendung währen des Fügeprozesses (Aufschmelzen des Dichtungsmaterials und Verbinden der elektrischen Kontakte) während des Abkühlens auf Raumtemperatur und bis zur Übergabe der Verspannung an die temporäre Verspannvorrichtung, die nach dem Fügen und Abkühlen beispielsweise durch die Durchführung des erfindungsgemäßen Verfahrens zum temporären Verspannens eines Hochtemperatur-Brennstoffzellenstapels montiert wird.

Die temporäre Verspannvorrichtung sorgt dafür, dass der Brennstoffzellenstapel sicher von der Produktionsstätte zum endgültigen Verbleib im Brennstoffzellensystem transportiert und gehandelt werden kann. Nach dem Einbau in das Brennstoffzellensystem wird eine endgültige Verspannvorrichtung vorgesehen. Diese kann in an sich bekannter Weise ausgeführt sein, beispielsweise so, wie dies in der DE 195 066 690 A1, der DE 103 08 382 D3 oder der JP 11007975 A angegeben ist. Besonders bevorzugt wird eine Verspannung durch eine Isolation, die um die temporäre Verspannvorrichtung herum angeordnet wird.

Anschließend kann das erfindungsgemäße Verfahren zum Entfernen der temporären Verspannvorrichtung eines Hochtemperatur-Brennstoffzellenstapels durchgeführt werden. Zu diesem Zweck muss der Hochtemperatur-Brennstoffzellenstapel lediglich in Betrieb genommen werden. Während des Erwärmens auf Betriebstemperatur von beispielsweise 850 °C verbrennt die temporäre Verspannvorrichtung und die notwendige Verspannung wird durch die endgültige Verspannvorrichtung übernommen.

In den Figuren 2a bis 2e sind mögliche Kunststoffelemente dargestellt, die die temporäre Verspannvorrichtung bilden können. Figur 2a zeigt eine mit einem Innengewinde ausgestatte Hülse. Figur 2b zeigt eine mit einem Außengewinde ausgestatte Schraube, die über einen Senkkopf verfügt, und eine Sechskantmutter 16. Figur 2c zeigt ein bandförmiges Verspannelement in Form eines handelsüblichen Kabelbinders 18. Figur 2d zeigt schematisch ein Stück Schrumpffolie 20, da Schrumpffolie ebenfalls als temporäre Verspannvorrichtung verwendet werden kann. Schließlich ist in Figur 2e ein Kunststoffstab 22 dargestellt, der zumindest an seinen Endabschnitten mit Außengewinden ausgestattet ist.

Allgemein hat die Verwendung von Kunststoffmaterial für die temporäre Verspannvorrichtung insbesondere die folgenden Vorteile: Die Verspannkraft ist fein einstellbar, da Kunststoffteile einen sehr geringen E-Modul haben und die Möglichkeit bieten, durch entsprechende Dimensionierung über die Streckgrenze hinaus zu belasten und somit die maximale Verspannkraft einzustellen. Dadurch wird die Verwendung von Federn überflüssig und eine Beschädigung durch zu hohe Verspannkräfte wird sicher vermieden. Weiterhin ist es nicht erforderlich, die temporäre Verspannvorrichtung aufwendig zu entfernen, da diese ohnehin elektrisch isoliert und so keine Kurzschlüsse verursachen kann. Darüber hinaus zersetzt sich die temporäre Verspannvorrichtung bei der Inbetriebnahme des Hochtemperatur-Brennstoffzellenstapels und verlässt in der Gasphase die Systemumgebung. Diese Gase (beispielsweise CO₂ und H₂O) sind für die Umwelt und die Brennstoffzelle unschädlich. Dabei findet die Übergabe der Verspannkraft von der temporären Verspannung auf eine endgültige Verspannung automatisch statt und es ist kein weiterer Handlingaufwand erforderlich. Ein Beschädigungsrisiko beim Übergang von der temporären Verspannung zu der endgültigen Verspannung durch Handlingfehler besteht nicht. Beim Einsatz eines externen endgültigen Verspannsystems entsprechend der DE 195 066 690 A1, der DE 103 08 382 B3 oder der JP 11007975 A, entfällt die aufwendige und kostenintensive Entfernung der temporären Verspannvorrichtung und die Abdichtung der Öffnungen in der Isolation.

Vorzugsweise hat der erfindungsgemäße Hochtemperatur-Brennstoffzellenstapel keine nach oben und unten überstehenden Verspannelemente und kann dadurch einfach im System montiert werden. Auch ein Stapeln mehrerer Substapel (30-Zeller-Modul) zu einem Gesamtbrennstoffzellenstapel (60- oder 90-Zeller) ist dann problemlos möglich.

Obwohl dies nicht dargestellt ist, kann sich die temporäre Verspannvorrichtung im Rahmen der vorliegenden Erfindung zumindest teil- und/oder abschnittsweise durch die Wiederholeinheiten des Hochtemperatur-Brennstoffzellenstapels 10 erstrecken.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Hochtemperatur-Brennstoffzellenstapel
- 12: Kunststoffhülse
- 14: Kunststoffschraube
- 16: Kunststoffmutter
- 18: Kunststoffband/Kunststoffkabelbinder
- 20: Schrumpffolie
- 22: Kunststoffstab
- 24: Wiederholelement
- 26: Endplatte
- 28: Endplatte
- 30: Lasche

## Patentansprüche

1. Hochtemperatur-Brennstoffzellenstapel (10), der durch eine temporäre Verspannvorrichtung verspannt ist, **dadurch gekennzeichnet, dass** die temporäre Verspannvorrichtung (12-22) aus einem Kunststoffmaterial besteht, das bei einer Temperatur verbrennt, die niedriger als die Betriebstemperatur des Hochtemperatur-Brennstoffzellenstapels (109 ist.

2. Hochtemperatur-Brennstoffzellenstapel (10) nach Anspruch 1, **dadurch gekennzeichnet, dass** das Kunststoffmaterial Polymerkunststoff umfasst, insbesondere Polypropylen und/oder Polyethylen.

3. Hochtemperatur-Brennstoffzellenstapel (10) nach Anspruch 1 oder 2, **dadurch gekennzeichnet, dass** die temporäre Verspannvorrichtung (12-22) zumindest eine Kunststoffschraube (14), zumindest eine Kunststoffmutter (16), zumindest ein Kunststoffband (18), zumindest eine Kunststoffhülse (12), zumindest einen Kunststoffstab (22) und/oder Schrumpffolie (20) umfasst.

4. Hochtemperatur-Brennstoffzellenstapel (10) nach einem der vorhergehenden Ansprüche, **dadurch gekennzeichnet, dass** der Hochtemperatur-Brennstoffzellenstapel (10) zwei zumindest im Wesentlichen parallele Endplatten (26, 28) umfasst, die durch die temporäre Verspannvorrichtung (12-22) aufeinander zu verspannt werden, und dass sich die temporäre Verspannvorrichtung (12-22) nicht oder nur geringfügig über die Endplatten (26, 28) hinaus erstreckt.

5. Verfahren zum temporären Verspannen eines Hochtemperatur-Brennstoffzellenstapels (10), **dadurch gekennzeichnet, dass** es den folgenden Schritt umfasst:
- Verspannen des Hochtemperatur-Brennstoffzellenstapels (10) mit einer temporären Verspannvorrichtung (12-22), die aus einem Kunststoffmaterial besteht, das bei einer Temperatur verbrennt, die niedriger als die Betriebstemperatur des Hochtemperatur-Brennstoffzellenstapels (10) ist.

6. Verfahren nach Anspruch 5, **dadurch gekennzeichnet, dass** das Kunststoffmaterial Polymerkunststoff umfasst, insbesondere Polypropylen und/oder Polyethylen.

7. Verfahren zum Entfernen einer temporären Verspannvorrichtung (12-22) eines Hochtemperatur-Brennstoffzellenstapels (10), **dadurch gekennzeichnet, dass** es den folgenden Schritt umfasst:
- Inbetriebnehmen des Hochtemperatur-Brennstoffzellenstapels (10) und dabei Verbrennen der temporären Verspannvorrichtung (12-22).

8. Verfahren nach Anspruch 7, **dadurch gekennzeichnet, dass** das Kunststoffmaterial Polymerkunststoff umfasst, insbesondere Polypropylen und/oder Polyethylen.

9. Verwendung zumindest einer Kunststoffschraube (14), zumindest einer Kunststoffmutter (16), zumindest eines Kunststoffbandes (18), zumindest einer Kunststoffhülse (12), zumindest eines Kunststoffstabes (22) und/oder von Schrumpffolie (20) als temporäre Verspannvorrichtung (12-22) für einen Hochtemperatur-Brennstoffzellenstapel (10).

10. Verwendung nach Anspruch 9, **dadurch gekennzeichnet, dass** das Kunststoffmaterial Polymerkunststoff umfasst, insbesondere Polypropylen und/oder Polyethylen.

## Claims

1. A high temperature fuel cell stack (10) retained by a temporary retaining device, **characterised in that** the temporary retaining device (12 - 22) consists of a plastic material burning at a temperature which is lower than the operating temperature of the high temperature fuel cell stack (10).

2. The high temperature fuel cell stack (10) according to claim 1, **characterised in that** the plastic material comprises polymeric plastic material, particularly polypropylene and/or polyethylene.

3. The high temperature fuel cell stack (10) according to claim 1 or 2, **characterised in that** the temporary retaining device (12 - 22) comprises at least one plastic screw (14), at least one plastic nut (16), at least one plastic strip (18), at least one plastic shell (12), at least one plastic rod (22) and/or a shrinking foil (20).

4. The high temperature fuel cell stack (10) according to one of the preceding claims, **characterised in that** the high temperature fuel cell stack (10) comprises two at least substantially parallel end plates (26, 28) retained towards each other by means of the temporary retaining device (12 - 22), and **in that** the temporary retaining device (12 - 22) does not or only slightly protrude beyond the end plates (26, 28).

5. A method for temporarily retaining a high temperature fuel cell stack (10), **characterised in that** it comprises the following step:
- retaining the high temperature fuel cell stack (10) by means of a temporary retaining device (12 - 22) consisting of a plastic material burning at a temperature which is lower than the operating temperature of the high temperature fuel cell stack (10).

6. The method according to claim 5, **characterised in that** the plastic material comprises polymeric plastic material, particularly polypropylene and/or polyethylene.

7. A method for removing a temporary retaining device (12 - 22) of a high temperature fuel cell stack (10), **characterised in that** it comprises the following step:
- activation of the high temperature fuel cell stack (10) and at the same time combustion of the temporary retaining device (12 - 22).

8. The method according to claim 7, **characterised in that** the plastic material comprises polymeric plastic material, particularly polypropylene and/or polyethylene.

9. The use of at least one plastic screw (14), at least one plastic nut (16), at least one plastic strip (18), at least one plastic shell (12), at least one plastic rod (22) and/or of a shrinking foil (20) as a temporary retaining device (12 - 22) for a high temperature fuel cell stack (10).

10. The use according to claim 9, **characterised in that** the plastic material comprises polymeric plastic material, particularly polypropylene and/or polyethylene.

## Revendications

1. Pile de cellules à combustible à haute température (10), serrée par un dispositif temporaire de serrage, **caractérisée en ce que** le dispositif temporaire de serrage (12 - 22) consiste en un matériau plastique qui brûle à une température plus basse que la température de service de la pile de cellules à combustible à haute température (10).

2. Pile de cellules à combustible à haute température (10) selon la revendication 1, **caractérisée en ce que** le matériau plastique comprend de la matière plastique polymérique, en particulier du polypropylène et/ou du polyéthylène.

3. Pile de cellules à combustible à haute température (10) selon la revendication 1 ou 2, **caractérisée en ce que** le dispositif temporaire de serrage (12 - 22) comprend au moins un vis en plastique (14), au moins un écrou en plastique (16), au moins une bande en plastique (18), au moins une douille en plastique (12), au moins un bâton en plastique (12) et/ou un film rétractable (20).

4. Pile de cellules à combustible à haute température (10) selon l'une des revendications précédentes, **caractérisée en ce que** la pile de cellules à combustible à haute température (10) comprend deux plaques terminales (26, 28) au moins essentiellement parallèles serrées l'une vers l'autre au travers du dispositif temporaire de serrage (12 - 22), et **en ce que** le dispositif temporaire de serrage (12 - 22) ne s'étend pas, ou seulement légèrement, au-delà des plaques terminales (26, 28).

5. Procédé de serrer temporairement une pile de cellules à combustible à haute température (10), **caractérisé en ce qu'**il comprend l'étape suivante qui consiste à:
- serrer la pile de cellules à combustible à haute température (10) avec un dispositif temporaire de serrage (12 - 22) qui consiste en un matériau plastique qui brûle à une température plus basse que la température de service de la pile de cellules à combustible à haute température (10).

6. Procédé selon la revendication 5, **caractérisé en ce que** le matériau plastique comprend de la matière plastique polymérique, en particulier du polypropylène et/ou du polyéthylène.

7. Procédé d'enlever un dispositif temporaire de serrage (12 - 22) d'une pile de cellules à combustible à haute température (10), **caractérisé en ce qu'**il comprend l'étape suivante qui consiste à:
- activer la pile de cellules à combustible à haute température (10) et en même temps brûler le dispositif temporaire de serrage (12 - 22).

8. Procédé selon la revendication 7, **caractérisé en ce que** le matériau plastique comprend de la matière plastique polymérique, en particulier du polypropylène et/ou du polyéthylène.

9. Utilisation d'au moins un vis un plastique (14), au moins un écrou en plastique (16), au moins une bande en plastique (18), au moins une douille en plastique (12), au moins un bâton en plastique (22) et/ou un film rétractable (20) en tant que dispositif temporaire de serrage (12 - 22) pour une pile de cellules à combustible à haute température (10).

10. Utilisation selon la revendication 9, **caractérisée en ce que** le matériau plastique comprend de la matière plastique polymérique, en particulier du polypropylène et/ou du polyéthylène.
